# EUROPEAN PATENT SPECIFICATION

(11) **EP 2 433 544 B1**
(45) Date of publication and mention of the grant of the patent: **26.09.2018**
(21) Application number: 10777825.0
(22) Date of filing: 21.05.2010
(51) Int. Cl.: A47L 13/20, A46B 5/00, A47L 13/10, A47L 13/24

(54) **CLEANER HOLDER AND CLEANING TOOL**
REINIGUNGSWERKZEUGHALTER UND REINIGUNGSWERKZEUG
SUPPORT D'INSTRUMENT DE NETTOYAGE ET INSTRUMENT DE NETTOYAGE

(30) Priority: 21.05.2009 JP 2009123619
(43) Date of publication of application: 28.03.2012
(73) Proprietor: UNI-CHARM CORPORATION, Ehime 799-0111 (JP)
(72) Inventor: TANAKA Yoshinori, Kanonji-shi Kagawa 769-1602 (JP); FUKUZAWA Masumi, Kanonji-shi Kagawa 769-1602 (JP)
(74) Representative: Murgatroyd, Susan Elizabeth
(86) International application number: PCT/JP2010/058620
(87) International publication number: WO 2010/134593

(56) References cited:
- EP-A1- 1 938 738
- JP-A- 11 000 298
- JP-A- 11 019 018
- JP-A- 2003 265 390
- JP-A- 2003 265 391
- US-A1- 2005 005 381

## Description

### BACKGROUND OF THE INVENTION

### Field of the Invention

The invention relates to a cleaning tool to clean an object to be cleaned.

### Description of the related Art.

Japanese non-examined laid-open Patent Publication No.H09-154791 discloses a cleaning tool which includes a cleaning cloth and a handle for detachably holding the cleaning cloth. A long head part (holding part) is formed on the end of the handle, and the cleaning cloth is held by the head by inserting the head into a receiving region of the cleaning cloth.

On the other hand, in designating a cleaning tool of this type in which a cleaning element is held by a holding part of a cleaning element holder, it is required to provide a structure which allows the holding part to deflect in more directions such that various types of cleaning operation can be performed according to the kind and location of the object to be cleaned. However, the known cleaning tool is capable of cleaning an object to be cleaned by using the cleaning cloth held by the handle, but deflection of the holding part (head part) having a plate-like shape and inserted into the receiving region of the cleaning cloth is almost limited in the vertical direction, so that it is difficult to secure directional freedom of deflection of the holding part during cleaning operation.

US 2005/0005381 A1 discloses a device for holding a cleaning wiper including a synthetic resin body portion bifurcated to have a pair of support plates to be inserted into a tube of the wiper; and a handle portion extending from the body portion to be held by hand. Each support plate is in an elongated plate form having a width larger than a thickness so as to be deformable upwardly, and is also elastically deformable in directions α so that tapered side edges of the support plates may come into contact with each other.

EP1938738 A1 discloses a cleaning implement including a cleaning article having a pocket and a holder adapted to be inserted into the pocket to hold the cleaning article. The holder includes a handle, an insertion portion extending from one end of the handle, and a retaining means for retaining the vicinity of the inlet opening of the cleaning article. The insertion portion preferably has a flexibility value of 5 to 60 mm. The load required to push a pair of actuating portions inboard to release the retaining means is preferably 0.1 to 5N.

### SUMMARY OF THE INVENTION

Accordingly, it is an object of the invention to provide a cleaning tool with a holding part with directional freedom of deflection for a smoother cleaning operation.

The above-described problem can be solved by the features of the claimed invention. This invention can be applied to the construction of cleaning tools for cleaning objects to be cleaned which include regions to be cleaned (floors, walls, windows, ceilings, external walls, posts, furniture, clothes, curtains, blinds, bedding, lighting, electrical cords, home electric appliances, etc.) inside and outside of houses, apartments, buildings, factories, vehicles, etc. and regions of human body parts to be cleaned. These regions to be cleaned may be either flat or curved, uneven or stepped.

A cleaning element holder according to this invention is an elongate cleaning element holder for holding a cleaning element to be used for cleaning an object to be cleaned and includes at least a grip part and a holding part. The grip part is designed to be held by user's hand. The holding part extends from the grip part in a longitudinal direction of the cleaning element holder and is designed to hold the cleaning element. The grip part and the holding part may be inseparably formed as one piece, or they may be separably formed.

Accordingly, the present invention consists in an elongate cleaning element holder for holding a cleaning element to be used for cleaning an object to be cleaned comprising: a grip part to be held by user's hand, and a plurality of holding parts which extend from the grip part in a longitudinal direction of the cleaning element holder and hold the cleaning element, wherein: each holding part has deflection displacement characteristics at least in a first direction along a thickness of the holding part and transverse to an extending direction of the holding part and a second direction along a width of the holding part and transverse to the first direction, the holding parts being disposed side by side in the second direction, characterized in that: an insert space for the object to be cleaned is provided between the holding parts disposed side by side; when a load of 2.5 N is applied in the first direction to an end of the holding part in the extending direction, the holding part deflects 15 to 80 degrees in the first direction, and when a load of 2.5 N is applied in the second direction to the end of the holding part , the holding part deflects 25 to 55 degrees in the second direction; and a distance between the holding parts disposed side by side is constant in the extending direction of the holding part and the width of each of the holding parts along the second direction increases toward the end from the connection between the holding part and the grip part.

With such a construction, an object to be cleaned can be held between the adjacent holding parts and wiped under appropriate load. For example, when wiping a wider object to be cleaned than the insert space, the wider object inserted into the insert space can be held between the easily deflected holding parts and wiped under appropriate load. Further, by holding the object between the holding parts and further twisting the holding parts around the longitudinal axis, even a narrower or thinner object to be cleaned than the insert space can be wiped under appropriate load with the cleaning element reliably held in close contact with the object.

As for the manner of increasing the extent of the holding part along the second direction, for example, the manner of increasing it in a straight or curved line or a stepped form can be appropriately selected.

Additionally, with such a construction, the spacing between the holding part is secured and prevented from becoming wider than necessary. This is effective in avoiding the user from having an image that it has a poor molding accuracy (poor quality) due to a sink generated during (a dent or depression generated by flow or shrinkage of material) or that the spacing between the holding parts is widened due to continued use. Further, in the state in which the holding parts having the second extent along the second direction which increases toward the end are placed side by side, the cleaning element holder is well balanced as a whole, so that the cleaning element holder can effectively give a better impression in its appearance on the user.

In the cleaning element holder of this invention, particularly, the holding part has deflection displacement characteristics at least in a first direction transverse to an extending direction of the holding part and a second direction transverse to the first direction. The holding part is allowed to deflect around a part between the grip part and the holding part, or typically around a connection between the grip part and the holding part or around a root of the holding part. When a load of 2.5 N is applied in the first direction to an end of the holding part in the extending direction, the holding part deflects 15 to 80o degrees in the first direction, and when a load of 2.5 N is applied in the second direction to the end of the holding part, the holding part deflects 25 to 55 degrees in the second direction. The angle of deflection displacement of the holding part is typically defined as an angle formed between an extending line of the yet-to-be deflected holding part and a line connecting an end of the deflected holding part and a support point of the deflection. With such a deflection displacement characteristic, in a cleaning operation which is performed by lightly pressing the cleaning element against an object to be cleaned, the holding part can be deflected by proper deflection displacement appropriate to the load. Further, generally constant deflection displacement can be allowed in both the first and second directions, so that the holding part can be provided with directional freedom of deflection.

In a further embodiment of the cleaning element holder according to this invention, preferably, when a load of 0.5 N is applied to the end in the first direction, the holding part deflects 6 to 50 degrees in the first direction, and when a load of 0.5N is applied to the end in the second direction, the holding part deflects 8 to 35 degrees in the second direction. With such a deflection displacement characteristic, in a cleaning operation which is performed by very lightly and softly sliding the cleaning element without pressing it against the object to be cleaned, the holding part can be deflected by proper deflection displacement appropriate to the load.

In a further embodiment of the cleaning element holder according to this invention, preferably, when a load of 4.7 N is applied to the end in the first direction, the holding part deflects 35 to 85 degrees in the first direction, and when a load of 4.7 N is applied to the end in the second direction, the holding part deflects 45 to 83 degrees in the second direction. With such a deflection displacement characteristic, in a cleaning operation which is performed by quite securely pressing the cleaning element against the object to be cleaned, the holding part can be deflected by proper deflection displacement appropriate to the load.

In a further embodiment of the cleaning element holder according to this invention, preferably, a thickness of the holding part along the first direction decreases toward the end from a connection. As for the manner of decreasing the extent of the holding part along the first direction and the manner of increasing the extent of the holding part along the second direction, for example, the manner of decreasing or increasing it in a straight or curved line or a stepped form can be appropriately selected. Thus, the cleaning element holder can be provided with the holding part having an extent along the first direction which decreases toward the end from the connection.

Further, such a construction is effective in more delicate wiping operation using the end of the holding part. Further, the end can absorb a primary contact pressure between the holding part and the object to be cleaned, so that this construction is also effective in providing the user with a soft feel in use. Moreover, in the holding part, the connection is provided with a higher rigidity than the end, so that the user can be readily convinced that the cleaning element holder has a high strength.

In a further embodiment of the cleaning element holder according to this invention, preferably, the thickness of the holding part along the first direction is constant in the extending direction of the holding part. Thus, the cleaning element holder can be provided with the holding part having an extent along the first direction which is constant in the extending direction of the holding part.

In a further embodiment of the cleaning element holder according to this invention, preferably, a lower surface of the holding part along the first direction is recessed upward in the first direction. With such a construction, by provision of the recess formed in the end of the holding part, the holding part can easily deflect in the first direction.

In a further embodiment of the cleaning element holder according to this invention, preferably, when a load of 2.5 N is applied to the end, the holding part deflects such that an amount of displacement in the second direction is smaller than an amount of displacement in the first direction. With such a construction, the amount of displacement in the second direction is reduced, which is effective in securing a load under which the cleaning element can be readily held in close contact with the object to be cleaned when holding the object between the adjacent holding parts.

A cleaning tool according to this invention includes at least a cleaning element to be used for cleaning an object to be cleaned, and an elongate cleaning element holder for holding the cleaning element.

The cleaning element includes a fiber assembly formed by a plurality of fibers extending in a direction transverse to the longitudinal direction of the cleaning element, a nonwoven fabric laminate formed by a plurality of nonwoven fabric sheets, a bonded part for bonding the fiber assembly and the nonwoven fabric laminate which are overlaid one on the other, and an insert region into which a holding part is inserted. The fiber assembly is formed by a plurality of fibers extending in a direction transverse to the longitudinal direction of the cleaning element. Typically, the longitudinal direction of the cleaning element is also defined as an extending direction of the holding part in a state in which the cleaning element holder is attached to the cleaning element. The nonwoven fabric laminate is formed by a plurality of nonwoven fabric sheets. The bonded part is designed as bonded portions for bonding the fiber assembly and the nonwoven fabric laminate which are overlaid one on the other. The bonded part includes a bonded portion for bonding the fiber assembly in its entirety or in part, a bonded portion for bonding the nonwoven fabric laminate in its entirety or in part, and a bonded portion for bonding the fiber assembly in its entirety or in part and the nonwoven fabric laminate in its entirety or in part. The insert region is designed as a region which is defined by the plurality of nonwoven fabric sheets and the bonded part and receives the holding part. The insert region can be typically formed by an insert hole, a slit, a cut or the like into which the holding part can be inserted. As for the cleaning element holder, the above-described cleaning element holder can be used.

With such a construction, a cleaning tool having a cleaning element holder is provided in which the holding part can be provided with directional freedom of deflection and the holding part can be deflected by proper deflection displacement appropriate to the load.

Further, the cleaning element according to this invention may be of disposable type designed for single use, disposable type designed for multiple use which can be used several times, while holding dust or dirt which has been removed from the object to be cleaned, or reusable type which can be reused by washing.

As described above, according to this invention, in a cleaning tool in which a cleaning element for cleaning an object to be cleaned is held by a holding part of a cleaning element holder, the holding part can be provided with directional freedom of deflection so that smoother cleaning operation can be realized. Other objects, features and advantages of the present invention will be readily understood after reading the following detailed description together with the accompanying drawings and the claims.

### DETAILED DESCRIPTION OF THE INVENTION

Each of the additional features and method steps disclosed above and below may be utilized separately or in conjunction with other features and method steps to provide and manufacture improved cleaning element holders and cleaning tools and method for using such cleaning tools and cleaning element holders, and devices utilized therein. Representative examples of the present invention, which examples utilize many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

A structure of a cleaning tool 100 as one embodiment of a "cleaning tool" according to the present invention is now explained with reference to the drawings. The cleaning tool 100 is configured as the cleaning tool which is used for cleaning an object to be cleaned. Objects to be cleaned typically include regions to be cleaned (floors, walls, windows, ceilings, external walls, posts, furniture, clothes, curtains, blinds, bedding, lighting, electrical cords, home electric appliances, etc.) inside and outside of houses, apartments, buildings, factories, vehicles (motor vehicles), etc. and regions of human body parts to be cleaned. These object to be cleaned may have a planar structure or a three-dimensional structure. These regions to be cleaned may be either flat or curved, uneven or stepped.

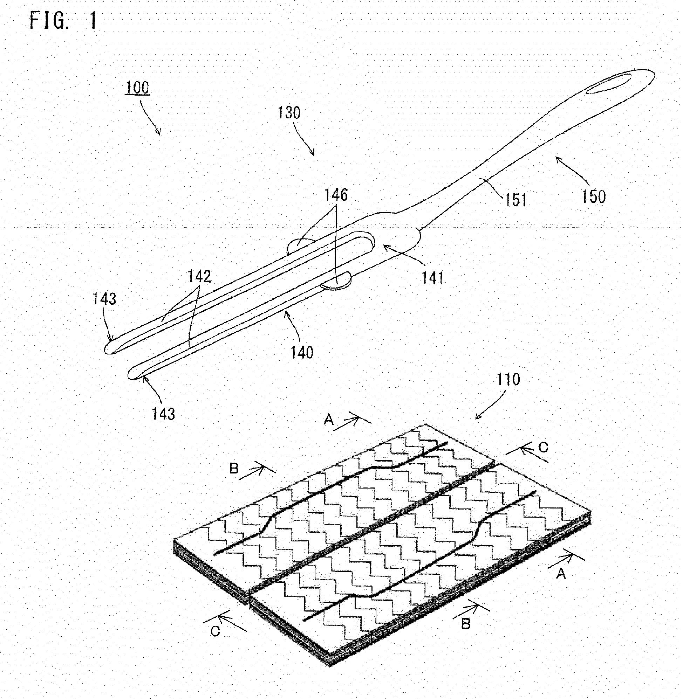

FIG. 1 is a perspective view showing a cleaning element 110 and a cleaning element holder 130 that form the cleaning tool 100 according to this embodiment, in a state in which they are not yet attached to each other. As shown in FIG. 1, the cleaning tool 100 comprises the cleaning element 110 (which is also referred to as a "mop") and the cleaning element holder 130.

The cleaning element 110 has a function of wiping, sweeping or scraping dust, dirt or contamination on a region to be cleaned (hereinafter also referred to as "object to be removed") on an object to be cleaned. The cleaning element 110 is in a sheet-like or plate-like form at the time of purchase or in initial unused state, and in use, it is loosened such that its volume is increased in the direction of the sheet thickness. The cleaning element 110 is a rectangular sheet in plan view, extending in a predetermined longitudinal direction (the direction of the length), and has a layered structure in which a plurality of sheets (a cleaning element sheet part 116 and a holding sheet part 112 which are described below) having the same planar shape are overlaid one on the other, which will be explained in more detail below. The cleaning element 110 herein is a feature that corresponds to the "cleaning element" according to this invention.

Further, the cleaning element 110 may also have a square or other shape in plan view as necessary. The cleaning element 110 having a rectangular or square shape in plan view is designed such that its corners are right-angled or rounded as necessary. The cleaning element 110 may be of disposable type designed for single use, disposable type designed for multiple use which can be used several times, while holding the object to be removed which has been removed from the region to be cleaned, on the brush portion, or reusable type which can be reused by washing.

The cleaning element holder 130 is removably attached to the cleaning element 110 constructed as described above. The cleaning element holder 130 is an elongate member including a holder body 140 and a handle 150 connected to each other. The cleaning element holder 130 is typically formed of synthetic resin material. The cleaning element holder 130 herein is a feature that corresponds to the "cleaning element holder" according to this invention. The handle 150 includes a handle body 151 extending in an elongate form, and the handle body 151 is connected to the holder body 140 via a connection 141. The handle body 151 of the handle 150 is a part to be held by user's hand. An appropriate structure of the cleaning element holder 130 includes a structure in which the holder body 140 and the handle 150 (the handle body 151 and the connection 141) are separately formed and designed to be assembled together, a structure in which the holder body 140 and the handle 150 are integrally formed together with the connection 141, a structure in which two of the holder body 140, the handle 150 and the connection 141 are integrally formed. The handle 150 and the handle body 151 herein form the "grip" according to this invention.

The holder body 140 has a function of detachably holding the cleaning element 110. The holder body 140 includes a pair of right and left holding parts 142. The pair of right and left holding parts 142 herein are disposed side by side in a lateral direction transverse to the longitudinal direction of the handle 150 when the longitudinal direction of the handle 150 is defined as a longitudinal direction of the cleaning tool.

The pair of holding parts 142 extend forward in the longitudinal direction from the connection 141 to an end 143 and in parallel (side by side) with a predetermined spacing therebetween on the same plane. The connection 141 and the end 143 are features that correspond to the "connection" and the "end", respectively, according to this invention. The holder body 140 has a bifurcated form having the holding parts 142. Preferably, each of the holding parts 142 typically has an extending length of 100 to 180 mm in the longitudinal direction. Each of the holding parts 142 has a protruding piece 146 protruding outward from the outer edge of the holding part 142. One or more protruding pieces 146 are preferably provided in the longitudinal direction of the holding part 142. With this construction, a region of the holding part 142 which has the protruding piece 146 forms a large-width portion having the largest extent in the lateral direction. In this embodiment, each of the holding parts 142 is formed of synthetic resin material or particularly olefinic thermoplastic elastomer resin by injection molding and has a flexural modulus of about 310 MPa. The holding parts 142 herein form the "holding part" according to this invention.

Further, in this specification, the extending direction of the holding parts 142 in the longitudinal direction is defined as the "longitudinal direction of the cleaning element" with respect to the cleaning tool 100 and the cleaning element 110, and the direction of parallel placement of the pair holding parts 142 or the direction transverse to the longitudinal direction of the holding parts 142 is defined as the "lateral direction of the cleaning element" with respect to the cleaning tool 100 and the cleaning element 110. Further, a region of the end 143 of the holding part 142 with the cleaning element attached to the cleaning element holder is defined as the "front end region of the cleaning element" or the "front of the cleaning element", and a region of the connection 141 of the holding part 142 is defined as the "rear end region of the cleaning element" or the "rear of the cleaning element".

Each of the holding parts 142 can be inserted into an associated insert region (an insert hole 115 which is described below) formed in the cleaning element 110 and has a function of holding the cleaning element 110 in the inserted state. In the inserted state, the holding parts 142 are fitted in the insert region of the cleaning element 110 by close sliding contact, so that the cleaning element 110 is securely attached to the cleaning element 110. Further, in the inserted state, the large-width portions or the protruding pieces 146 of the holding parts 142 serve as a stopper for preventing the cleaning element 110 from coming off. With this construction, in the inserted state in which each of the holding parts 142 is inserted into the insert region of the cleaning element 110, the cleaning element 110 is reliably retained as being prevented from coming off by the holder body 140.

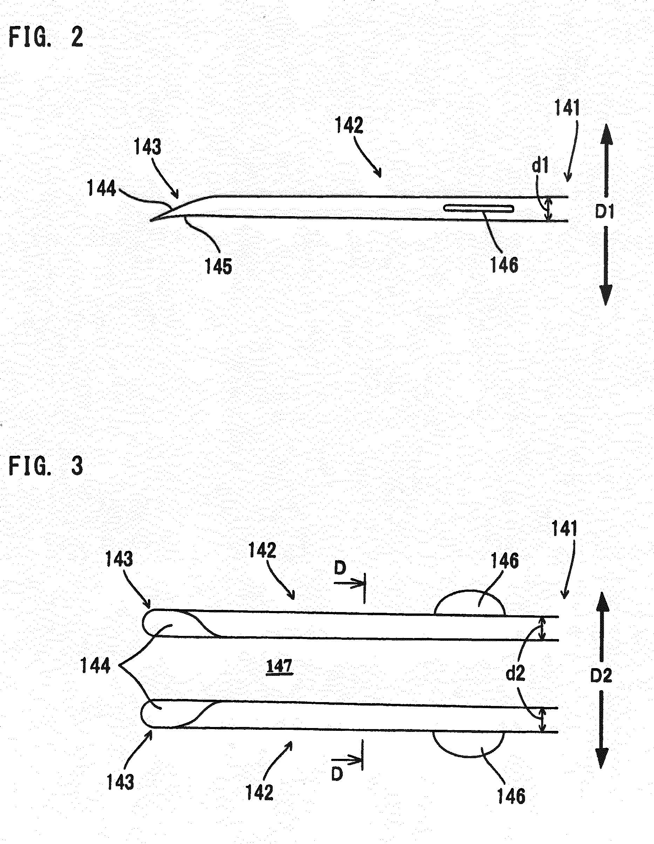

The specific structure of the above-described holding parts 142 is now explained in more detail with reference to FIGS. 2 and 3. FIG. 2 is a side view of the holding parts 142 in FIG. 1, and FIG. 3 is a plan view of the holding parts 142 in FIG. 1.

As shown in FIGS. 2 and 3, in this embodiment, each of the holding parts 142 has a first extent d1 (which is also referred to as "thickness of the holding part") along a first direction D1 (vertical direction as viewed in FIG. 2) which decreases toward the end 143 from the connection 141, and a second extent d2 (which is also referred to as "width of the holding part") along a second direction D2 (vertical direction as viewed in FIG. 3) which increases toward the end 143 from the connection 141. Preferably, the first extent d1 and the second extent d2 are typically set in the range of 6 to 7 mm. As for the manner of decreasing the extent of the holding part 142 along the first direction D1, the holding part 142 may be appropriately configured such that the extent decreases toward the end 143 from the connection 141 in a straight or curved line or a stepped form. Similarly, as for the manner of increasing the extent of the holding part 142 along the second direction D2, the holding part 142 may be appropriately configured such that the extent increases toward the end 143 from the connection 141 in a straight or curved line or a stepped form. The first direction D1 and the second direction D2 are features that correspond to the "first direction" and the "second direction", respectively, according to this invention.

The construction in which the first extent d1 of the holding part 142 decreases toward the end 143 from the connection 141 is effective in more delicate wiping operation using the end 143 of the holding part 142. Further, the end 143 can absorb a primary contact pressure between the holding part 142 and the object to be cleaned, so that this construction is also effective in providing the user with a soft feel in use. Moreover, the connection 141 is provided with a higher rigidity than the end 143 in the holding part 142, so that the user can be readily convinced that the cleaning element holder has a high strength.

Further, with the construction in which the second extent d2 of the holding part 142 increases toward the end 143 from the connection 141, the cleaning element holder is well balanced as a whole with the pair holding parts placed side by side, so that the cleaning element holder can effectively give a better impression in its appearance on the user.

The first extent d1 of the holding part 142 can be appropriately changed as necessary, for example, according to the specifications of the holding part. For example, the holding part may have the first extent d1 which is constant in the extending direction or increases toward the end 143 from the connection 141 and the second extent d2 which increases toward the end 143 from the connection 141.

Particularly, by provision of the holding part having the first extent d1 which is constant in the extending direction, the spacing between the holding parts is secured and prevented from becoming wider than necessary. This is effective in avoiding the user from having an image that it has a poor molding accuracy (poor quality) due to a sink generated during molding (a dent or depression generated by flow or shrinkage of material) or that the spacing between the holding parts is widened due to continued use.

Further, in this embodiment, the end 143 of the holding part 142 has an upper surface (one side in the first direction D1) in the form of an inclined surface 144 inclined with respect to the extending direction of the holding part. Further, the end 143 has a lower surface (the other side in the first direction D1) in the form of a recessed surface 145 recessed upward in the first direction D1 (to one side in the first direction D1). The inclined surface 144 of the holding part 142 is effective in realizing ease of insertion of the holding part 142 into the insertion hole of the cleaning element 110. The recessed surface 145 of the end 143 of the holding part 142 is effective in realizing ease of deflection of the holding part 142 in the first direction D1. This construction is a feature that corresponds to the construction in which "one side along the first direction is recessed in the first direction" according to this invention. The inclined surface 144 and the recessed surface 145 can be appropriately omitted as necessary.

Further, in this embodiment, the pair holding parts 142 are disposed side by side with a spacing in the second direction D2 and extend in the longitudinal direction of the cleaning element holder 130. An insert space 147 between the holding parts 142 is designed as a space for receiving and holding an object to be cleaned from the both sides. Preferably, the width of the space 147 is typically 12 to 25 mm. The insert space 147 herein is a feature that corresponds to the "insert space" according to this invention.

The holding part 142 has predetermined deflection displacement characteristics ("deflection characteristics" or "bending elastic deformation characteristics") and predetermined deflection recovery characteristics ("elastic recovery characteristics" or "bending elastic recovery characteristics") around the connection 141, in the directions of 360 degrees including at least the first direction D1 transverse to the extending direction of the holding part and the second direction D2 transverse to the first direction D1, or around the axis of the holding part 142 (in all the radial directions on a plane transverse to the extending direction of the holding part 142).

### (Deflection Displacement Characteristics)

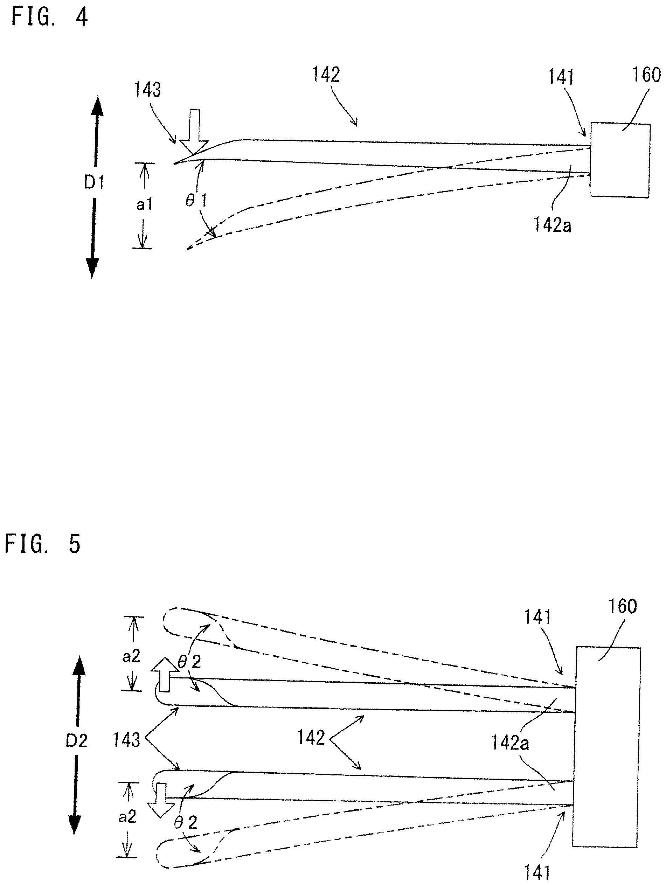

The deflection displacement characteristics can be measured, for example, by a deflection displacement measuring method as shown in FIGS. 4 and 5. FIG. 4 is a side view of the holding parts 142 in FIG. 1, schematically illustrating the manner of measuring deflection displacement in the first direction D1. FIG. 5 is a plan view of the holding parts 142 in FIG. 1, schematically illustrating the manner of measuring deflection displacement in the second direction D2. In the deflection displacement measurement shown in FIGS. 4 and 5, a certain load is applied to the end 143 in a predetermined direction with the connection 141 of the holding part 142 retained by a retainer 160. Then, an angle of a line connecting the end 143 of the deflected holding part 142 (shown by two-dot chain line in FIGS. 4 and 5) and a root 142a of a flexible region of the holding part 142 is measured by a measuring device such as a scale. This angle is shown by θ1 in the first direction D1 in FIG. 4, and by θ2 in the second direction D2 in FIG. 5. Further, the amount of displacement ("distance of displacement") is measured by a measuring device such as a scale. The amount of displacement is shown by a1 in the first direction D1 in FIG. 4 and by a2 in the second direction D2 in FIG. 5. Thus, the relationship between the actual load on the holding part 142 and the deflection range is obtained.

Inventors have actually measured the deflection displacement characteristics. They have repeatedly conducted the measurements about five to ten times and validated the reproducibility of the measurement results. In a cleaning operation which is performed by inserting a wider object to be cleaned than the insert space 147 into the insert space 147 between the holding parts 142, such deflection displacement characteristics are effective in efficiently performing a smooth wiping movement under appropriate load without need of application of a large load. Specifically, when objects to be cleaned having respective diameters of about 30 mm, 50 mm and 65 mm are inserted into the insert space 147, loads of 0.6 to 0.7 N, 1.5 to 1.7 N and 2.1 to 3.0 N can be provided on the respective objects to be cleaned. Further, when an object to be cleaned having a diameter of about 15 mm is inserted into the insert space 147, and twists of 45 degrees and 90 degrees is applied to the cleaning element holder 130 around its axis, loads of 0.3 to 0.5 N and 0.6 to 1.5 N can be provided on the cleaning element holder by the respective twists.

The load of 0.5 N is intended for a cleaning operation which is performed by very lightly and softly sliding the cleaning element without pressing it against the object to be cleaned. The load of 4.7 N is intended for a cleaning operation which is performed by quite securely pressing the cleaning element against the object to be cleaned. The load of 2.7 N is intended for a moderate cleaning operation intermediate between the cleaning operation under the load of 0.5 N and the cleaning operation under the load of 4.7 N and in which the cleaning element is lightly pressed against the object to be cleaned by moderate strength. The load range of 0.5 to 4.7 N intended for cleaning operations in this embodiment is defined as a load range in which the user's hand does not get easily fatigued during cleaning operation.

### (Deflection Recovery Characteristics)

The holding part 142 needs to have deflection recovery characteristics of quickly recovering to its original form when the load is taken off the holding part 142. The deflection recovery characteristics can be confirmed by a deflection recovery rate (%) obtained from an equation of (recovery displacement) / (deflection displacement upon application of load) × 100, for example, by using the same device used for measuring the deflection displacement characteristics as shown in FIGS. 4 and 5. As deflection recovery rate, a simple deflection recovery rate R1, a repeated deflection recovery rate R2 and a deflection recovery rate with lapse of time R3 can be used. The simple deflection recovery rate R1 (%) is obtained from an equation of (recovery displacement upon a lapse of ten seconds after load is released upon completion of one deflecting operation) / (deflection displacement upon application of load) × 100. The repeated deflection recovery rate R2 (%) is obtained from an equation of (recovery displacement upon a lapse of ten seconds after load is released upon completion of ten repeated deflecting operations) / (deflection displacement upon application of load) × 100. The deflection recovery rate with lapse of time R3 (%) is obtained from an equation of (amount of recovery upon a lapse of ten seconds after it is retained for ten seconds after a deflecting operation and then released) / (amount of deflection) × 100.

Inventors have actually measured the deflection recovery characteristics. As a result of the measurements, when the deflection displacement upon application of load is 30 mm, 50 mm and 65 mm, it is confirmed that the holding part 142 of this embodiment has a simple deflection recovery rate R1 of 99 to 100 %. It is also confirmed that the holding part 142 of this embodiment has a repeated deflection recovery rate R2 of 97 to 99 % when the deflection displacement upon application of load is 30 mm, 50 mm and 65 mm. Further, it is also confirmed that the holding part 142 of this embodiment has a deflection recovery rate with lapse of time R3 of 95 to 97 % when the deflection displacement upon application of load is 30 mm, 50 mm and 65 mm. These measurements were repeatedly conducted about five to ten times in order to obtain each recovery rate and the reproducibility of the measurement results were validated. With such deflection recovery characteristics, deflection recovery is performed at a high rate of over 90 % for any of the deflection recovery rates R1, R2, R3. Therefore, the deflection recovery characteristics are effective in repeatedly performing a cleaning operation or performing a cleaning operation for a long hour.

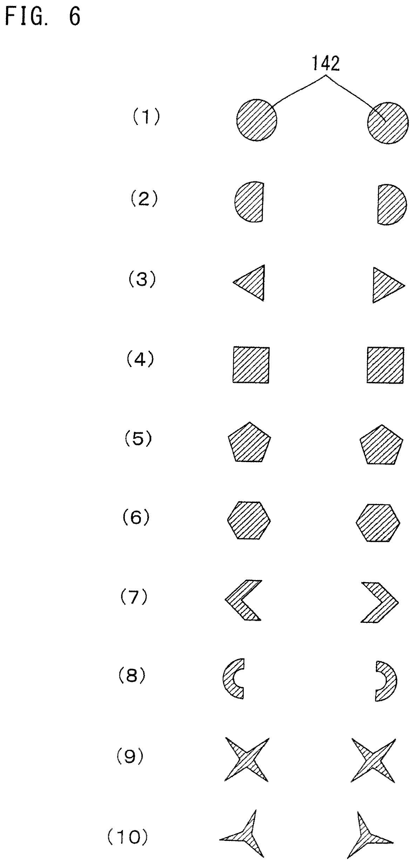

The sectional shape of the holding part 142 can be appropriately changed as necessary, such as circular, elliptical, semicircular, semi-elliptical, triangular, rectangular or polygonal shape, V-, Y- or X-shape or stelliform shape. FIG. 6 shows sectional shapes of the holding part 142, taken along line D-D in FIG. 3. In this embodiment, the holding part 142 can have a sectional shape such as the sectional shapes (1) to (10) shown in FIG. 6. The sectional shape of the holding part 142 is selected on condition that the holding part 142 has predetermined deflection displacement characteristics around the connection 141 at least in the first direction D1 transverse to the extending direction of the holding part and the second direction D2 transverse to the first direction D1.

As for the predetermined deflection displacement characteristics, the holding part preferably has at least a deflection displacement characteristic that, when a load of 2.5 N is applied to the end 143, the holding part deflects 15 to 80 degrees in the first direction D1 and 25 to 55 degrees in the second direction D2. Further, preferably, the holding part further has a deflection displacement characteristic that, when a load of 0.5 N is applied to the end 143, the holding part deflects 6 to 50 degrees in the first direction D1 and 8 to 35 degrees in the second direction D2. Further, preferably, the holding part further has a deflection displacement characteristic that, when a load of 4.7 N is applied to the end 143, the holding part deflects 35 to 85 degrees in the first direction D1 and 45 to 83 degrees in the second direction D2.

Further, in the case of the holding part 142 having the extending length of, for example, 110 mm, preferably, the holding part further has at least a deflection displacement characteristic that, when a load of 2.5 N is applied to the end 143, the holding part deflects by the amount of displacement of 29 to 98 mm in the first direction D1 and 45 to 83 mm in the second direction D2. Further, preferably, the holding part further has a deflection displacement characteristic that, when a load of 0.5 N is applied to the end 143, the holding part deflects by the amount of displacement of 11 to 81 mm in the first direction D1 and 15 to 60 mm in the second direction D2. Further, preferably, the holding part further has a deflection displacement characteristic that, when a load of 4.7 N is applied to the end 143, the holding part deflects by the amount of displacement of 60 to 100 mm in the first direction D1 and 74 to 99 mm in the second direction D2.

Further, in the case of the holding part 142 having the extending length of over 110 mm, the above-described range of the amount of displacement for each load shifts upward, while, in the case of the holding part 142 having the extending length shorter than 110 mm, the above-described range of the amount of displacement for each load shifts downward. Further, when a selected extending length of the holding part 142 is, for example, out of the range of 100 to 180 mm, a sectional shape of the holding part which has a deflection displacement characteristic that it deflects at least within the above-described angular range can be appropriately selected.

With the cleaning element holder 130 having the above-described construction, by the above-described deflection displacement characteristics of the holding part 142, generally constant deflection displacement can be allowed in all directions, so that the holding part 142 can be provided with directional freedom of deflection. Further, the holding part 142 deflects by proper deflection displacement appropriate to the load. Therefore, the cleaning operation can be performed without concern for orientation (for example, whether the right side or the wrong side) of the cleaning element 110. Further, portions of the cleaning element 110 which are not used for cleaning operation so much in a conventional technique can be effectively used, so that smoother cleaning operation can be realized. Further, even if a relatively heavy load is applied to the cleaning element holder 130, an excessive load can be absorbed and lessened by deflection of the holding part 142, so that delicate wiping operation can be always performed on the object to be cleaned. Even in wiping an uneven object to be cleaned or a very narrow region, such a cleaning element holder 130 can exert a desired cleaning effect by sliding the holding part along the region to be cleaned.

Further, with the cleaning element holder 130 of this embodiment, an object to be cleaned can be held between the pair holding parts 142 and wiped under appropriate load. For example, when wiping a wider object to be cleaned than the insert space 147, the wider object inserted into the insert space 147 can be held between the easily deflected holding parts 142 and wiped under appropriate load. Further, by holding the object between the holding parts 142 and further twisting the holding parts 142 around the longitudinal axis, even a narrower or thinner object to be cleaned than the insert space 147 can be wiped under appropriate load by reliably holding the cleaning element 110 in close contact with the object.

As for the cleaning operation of holding and wiping the object to be cleaned between the pair holding parts 142, preferably, when a load of 2.5 N is applied to the end 143, each of the holding parts 142 deflects such that the amount of displacement in the second direction D2 (in the lateral direction) is smaller than the amount of displacement in the first direction D1 (in the vertical direction). With this construction, the amount of displacement in the second direction D2 is reduced, which is effective in securing a load under which the cleaning element 110 can be readily held in closer contact with the object to be cleaned when holding the object between the holding parts 142.

Further, the cleaning element holder 1 30 of this embodiment is constructed such that the first extent d1 of the holding part 142 decreases toward the end 143 from the connection 141. Such a construction is effective in more delicate wiping operation using the end 143 of the holding part 142. Further, the end 143 can absorb a primary contact pressure between the holding part 142 and the object to be cleaned, so that this construction is also effective in providing the user with a soft feel in use. Moreover, the connection 141 is provided with a higher rigidity than the end 143 in the holding part 142, so that the user can be readily convinced that the cleaning element holder 130 has a high strength.

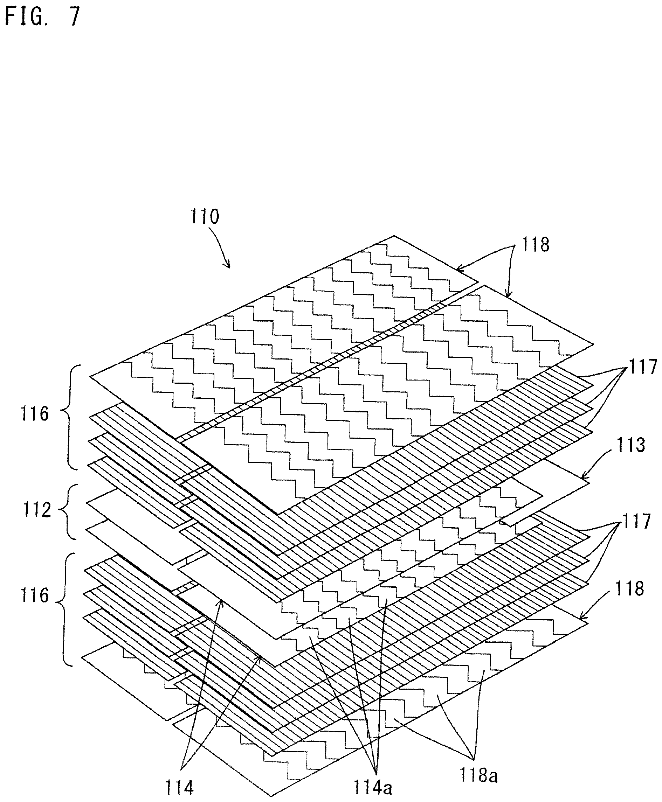

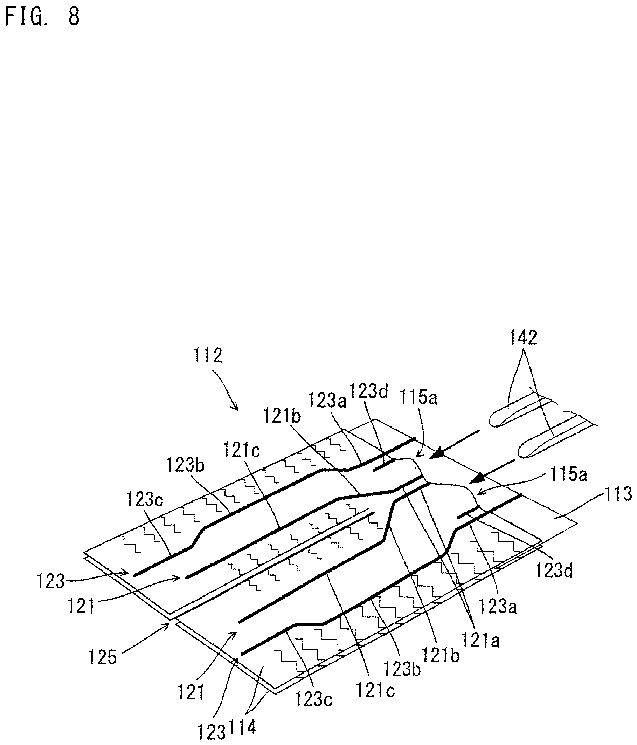

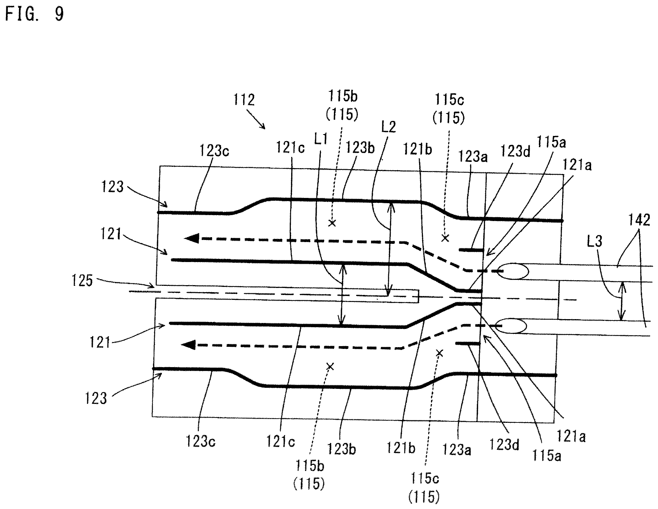

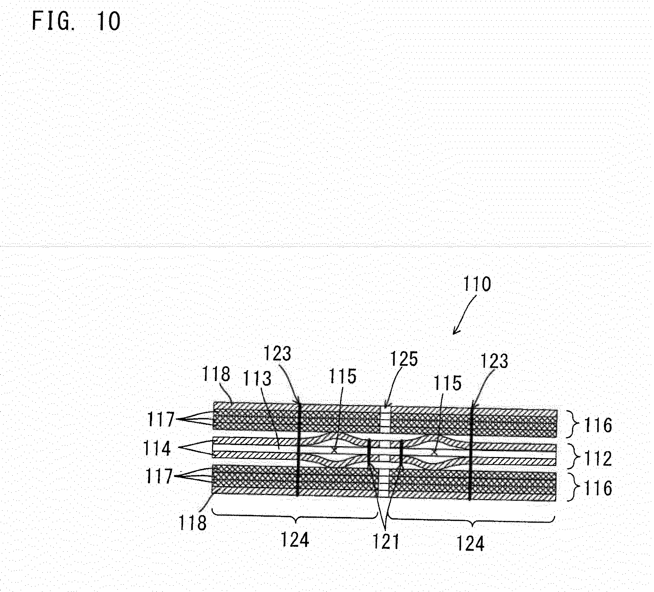

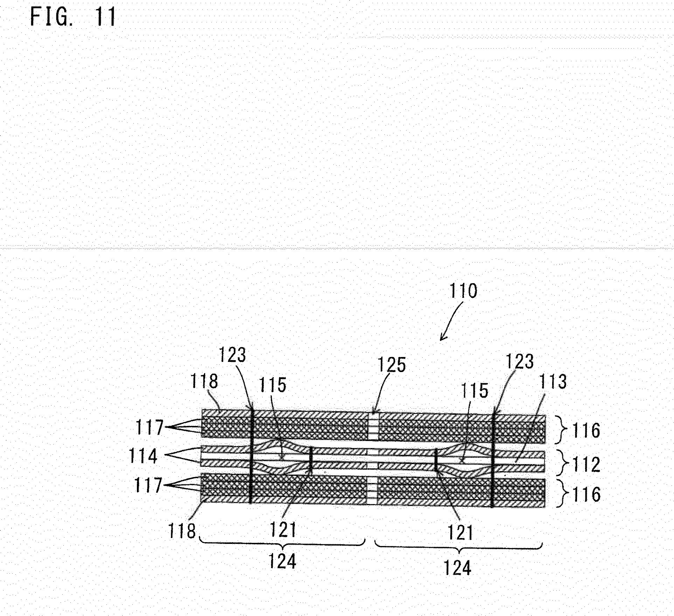

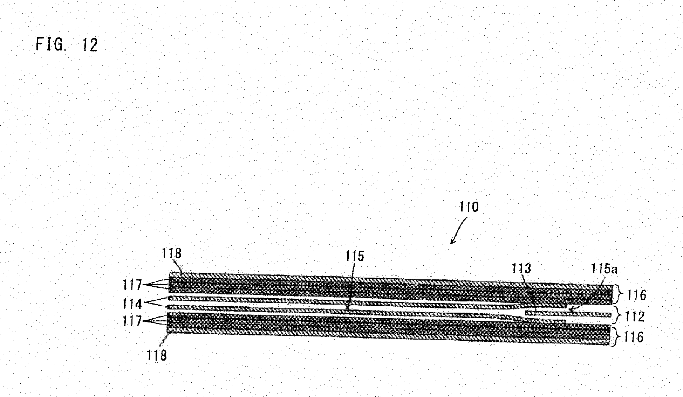

Now, the specific structure of the above-described cleaning element 110 is explained in more detail with reference to FIGS. 7 to 12 in addition to FIG. 1. FIG. 7 is a perspective view of the cleaning element 110 of FIG. 1 which is shown separated into elements of a layered structure. FIG. 8 is a perspective view of a holding sheet part 112 of the cleaning element 110 in FIG. 1. FIG. 9 is a plan view of the holding sheet part 112 in FIG. 8. Further, FIG. 10 is a sectional view of the cleaning element 110, taken along line A-A in FIG. 1, FIG. 11 is a sectional view of the cleaning element 110, taken along line B-B in FIG. 1, and FIG. 12 is a sectional view of the cleaning element 110, taken along line C-C in FIG. 1.

As shown in FIG. 7, in the cleaning element 110 of this embodiment, cleaning element sheet parts 116 are overlaid on both sides of the holding sheet part 112. As shown in FIGS. 8 and 9, the cleaning element 110 has a slit-like space 125 extending in the longitudinal direction of the cleaning element. The space 125 is typically configured as a cut formed by cutting the holding sheet part 112 in its center in a straight, curved or wiggly line in the longitudinal direction of the cleaning element. The space 125 typically extends in a straight, curved or wiggly line in the longitudinal direction of the cleaning element.

Further, as shown in FIGS. 10 and 11, the cleaning element 110 is split into a pair of right and left elongate split cleaning parts 124 by the space 125. The pair of right and left split cleaning parts 124 herein are disposed side by side in the lateral direction transverse to the longitudinal direction of the cleaning element. When the cleaning element 110 is attached to the cleaning element holder 130, the space 125 formed between the split cleaning parts 124 coincides with the insert space 147 formed between the pair holding part 142 and serves as a space into which an object to be cleaned can be inserted.

Particularly, as shown in FIG. 7, in the holding sheet part 112, a base sheet 113 is disposed between two holding sheets 114 and the base sheet 113 slightly protrudes from the holding sheets 114 on the side of insertion of the holding parts 142. In each of the split cleaning parts 124, the holding sheet part 112 is fusion-bonded together via a bonded part 121 (which is also referred to as the "fusion-bonded part"). The bonded part 121 is configured as a single bonding line (which is also referred to as the "fusion bonding line") in which a fusion-bonded portion of the bonded part 121 continuously extends along the longitudinal direction of the cleaning element. The holding sheet part 112 herein is a feature that corresponds to the "nonwoven fabric laminate" according to the present invention.

A space defined by the pair holding sheets 114 opposed to each other in the holding sheet part 112 is configured as an insert space in the form of the insert hole 115 extending in the longitudinal direction of the split cleaning parts 124 in order to allow insertion of the holding parts 142. At this time, the base sheet 113 which protrudes from the holding sheets 114 to the side of insertion of the holding parts 142 can smoothly guide the holding parts 142 into an opening 115a of the insert hole 115. The longitudinal direction of the split cleaning parts 124 is typically also defined as the extending direction of the holding parts 142 in a state in which the cleaning element holder 130 is attached to the cleaning element 110. The insert hole 115 herein is a feature that corresponds to the "insert region" according to this invention. Any insert region, such as a slit and a cut, into which the holding part can be inserted may also be used in place of the insert hole 115.

As shown in FIG. 7, each of the cleaning element sheet parts 116 includes three fiber assemblies 117 and a front sheet 118 which are stacked in layer, and in this state, the cleaning element sheet parts 116 are arranged on both sides (upper and lower sides) of the holding sheet part 112. At this time, the cleaning element sheet parts 116 are arranged such that the front sheet 118 is exposed on the surface of the cleaning element 110. Further, the cleaning element sheet part 116 may be disposed on only one side of the holding sheet part 112 as necessary.

Further, the holding sheet part 112 and the cleaning element sheet parts 116 which are described above are fusion-bonded together via a bonded part 123 in the state in which the cleaning element sheet parts 116 are overlaid on the both sides of the holding sheet part 112. The bonded part 123 is configured as an assembly of a plurality of bonding lines (also referred to as the "fusion-bonding lines") which continuously extend along the longitudinal direction of the cleaning element.

In this embodiment, the bonded parts 121, 123 constructed as described above have at least two functions by fusion bonding. The first function (hereinafter also referred to as the "first function of the bonded part") is to form the insert hole 115 into which the holding parts 142 can be inserted in a desired manner between the pair holding sheets 114. The second function (hereinafter also referred to as the "second function of the bonded part") is to bond the holding sheet part 112 and the cleaning element sheet parts 116 together to thereby form a brush portion having a desired shape formed by the cleaning element sheet parts 116 on the holding sheet part 112. The bonded parts 121, 123 constructed as described above form the "bonded part" according to this invention. Further, as for the manner of bonding the bonded parts 121, 123, alternatively or in addition to fusion bonding, gluing, fastening, seaming or other bonding manners may be used.

Here, the first and second functions by the bonded parts 121, 123 are described in more detail with reference to FIGS. 8 and 9.

### (First Function of Bonded Part)

As shown in FIGS. 8 and 9, the first function of the bonded part can be realized by the construction in which the bonded parts 121, 123 of this embodiment define the right and left sides of the insert hole 115 extending in the longitudinal direction of the split cleaning part 124.

Specifically, the bonded part 121 is designed as a bonded part which defines the inner side (the space 125 side) of the insert hole 115 and extends in the longitudinal direction of the cleaning element 110 (in the longitudinal direction of the split cleaning part 124). The bonded part 121 includes a bonding line 121a, a bonding line 121b and a bonding line 121c which are arranged in this order from an opening 115a side of the insert hole 115 toward the front end of the cleaning element 110 and connected to each other. In other words, in the bonded part 121, a single extending line is continuously formed by the bonding lines 121a, 121b, 121c. The bonding lines 121a, 121c extend straight substantially in the same direction as the direction of insertion of the holding part 142 into the insert hole 115, and the bonding line 121c is disposed outward of the bonding line 121a (on the opposite side from the space 125). The bonding line 121b is configured as an intermediate bonding line which is obliquely formed between the bonding line 121a and the bonding line 121c so as to connect associated ends of the bonding lines 121a, 121c.

The bonded part 123 is designed as a bonded part which defines the opposite side of the insert hole 115 from the bonded part 121 and extends along the longitudinal direction of the cleaning element 110 (the longitudinal direction of the split cleaning part 124). The bonded part 123 includes bonding lines 123a, 123b, 123c which are arranged in this order from the opening 115a side toward the front end of the cleaning element 110, and a bonding line 123d disposed inward of the bonding line 123a. In this embodiment, the bonding lines 123a, 123b, 123c of the bonded part 123 form a continuous single extending line. Further, the bonding lines 123a, 123b, 123c may be separated from each other by non-bonded parts formed therebetween, and/or the bonding line 123d may be omitted.

Further, in this embodiment, a predetermined relationship is preferably realized in the spacing between the bonded parts 121 and 123 which are constructed as described above. Specifically, as shown in FIG. 9, the pair bonded parts 121 on the opposite sides of the space 125 are preferably designed such that a distance L1 between the bonding lines 121c of the bonded parts 121 is longer than a distance L3 between the pair holding parts 142 (L1 > L3). It is particularly preferred that the distance L1 is set to be 175% to 300% of the distance L3. The distance L1 between the bonded parts 121 each of which defines the inner side of the associated insert hole 115 is also defined as a distance between the adjacent insert holes 115. In this case, the insert hole 115 includes a first insert hole component 115b extending along a region (a widely spaced part) of the insert hole 115 which extends along the bonded parts 121, the opening 115a and an obliquely extending second insert hole component 115c which is connected between the first insert hole component 115b and the opening 115a.

With such arrangement, when the holding parts 142 of the cleaning element holder 130 are inserted into the insert holes 115 of the cleaning element 110, the entire cleaning element 110 (the holding sheet part 112 and the cleaning element sheet parts 116) is gathered toward the inward or center of the cleaning element according to the distance L3 between the holding parts 142. Then the fiber assemblies of the split cleaning parts 124 which are adjacent to each other in the region (the widely spaced part) extending along the right and left bonded parts 121 move toward each other and overlap each other in a direction transverse to the longitudinal direction of the split cleaning parts 124 in the space 125, so that an overlap region 119 which is described below is formed. As a result, the volume of the cleaning element 110 can be increased to a desired extent by the split cleaning parts 124. Therefore, even if the object to be cleaned which is inserted into the space 125 between the split cleaning parts 124 is relatively small, a sufficient cleaning effect can be obtained by applying an appropriate pressure to the object to be cleaned.

In order to further ensure such a cleaning effect, it is preferred that the pair holding parts 142 of the holder body 140 which are constructed as described above are formed of an elastic material which can deform at least in a direction in which the pair holding parts are spaced apart from each other, or typically a plastic material having both flexibility and shape retaining function. With such construction, the entire cleaning element 110 is reliably gathered toward the inward or center of the cleaning element by its shape retaining function of the holding parts 142, and the object to be cleaned which is inserted into the space 125 is reliably wiped due to flexibility of the holding parts 142.

Further, with the construction in which the holding parts 142 of the cleaning element holder 130 are made of non-metallic material, even if the insertion width of the object to be cleaned which is inserted into the space 125 between the split cleaning parts 124 is longer than the distance between the holding parts 142, a sufficient cleaning effect can be obtained without damaging the object to be cleaned by the holding parts 142.

Further, in this embodiment, preferably, the relationship between the distance L1 and the distance L3 is designed to be L1 > L3, and their relationship with a distance L2 between a center line (an extending line of the space 125) in the longitudinal direction of the cleaning element and the bonded part 123 is designed to be (L1/2 - L3/2) < L2. Such configuration is designed such that an inner edge (an edge on the space 125 side) of one of the split cleaning parts 124 is not gathered over the bonded part 123 of the other split cleaning part 124, when the holding parts 142 of the cleaning element holder 130 are inserted into the insert hole 115 of the cleaning element 110.

Therefore, such configuration is effective for preventing the cleaning element 110 from excessively increasing in volume and preventing the brush portion of the split cleaning parts 124 (the holding sheet part 112 and the cleaning element sheet parts 116) from becoming entangled too much with each other to provide a suitable form for cleaning.

### (Second Function of Bonded Part)

Further, as shown in FIGS. 8 and 9, in this embodiment, the second function of the bonded part can be realized by the construction in which the bonding lines 123a, 123b, 123c of the bonded part 123 formed as the single extending line are arranged to be stepped with respect to each other.

Specifically, the bonded part 123 includes the bonding line 123c which extends straight in the longitudinal direction of the split cleaning parts 124 in the front end region of the cleaning element in which the front end of the holding part 142 is placed when the cleaning element holder is attached to the cleaning element, the bonding line 123b which is disposed rearward of the bonding line 123c in the cleaning element and extends straight in the longitudinal direction of the split cleaning part 124, and the bonding line 123a which is disposed rearward of the bonding line 123b in the cleaning element and extends straight in the longitudinal direction of the split cleaning part 124. Then the bonding line 123b formed between the bonding line 123a and the bonding line 123c is disposed outward of the bonding lines 123a and 123c (on the opposite side from the space 125) in the cleaning element. Further, in the bonded part 123, inclined bonded parts each are disposed between the bonding line 123a and the bonding line 123b and between the bonding line 123b and the bonding line 123c. Further, the bonded part 123 herein is designed as an outer bonded part which defines an outer side of the insert hole 115 in a direction transverse to the longitudinal direction of the cleaning element 110.

With such a construction, the distance from the bonded part 123 to outer free ends of the holding sheet part 112 and the cleaning element sheet parts 116 is longer in the front and the rear of the cleaning element than in the middle of the cleaning element in the longitudinal direction of the cleaning element. Thus, when the holding part 142 of the cleaning element holder 130 is inserted into the insert hole 115 of the cleaning element 110, a contiguous contour of the bonded part 123 which is formed by the bonding lines 123a, 123b, 123c is formed in an outwardly bulged gentle curve, so that the cleaning element has a rounded shape as a whole. The cleaning element having such a rounded shape as a whole makes a soft impression on the user, and the user is emotionally convinced that the shape of the cleaning element is suitable for cleaning operation or ensures an easy cleaning operation. As a result, the user's motivation for cleaning can be effectively enhanced.

Further, by provision of the bonded part 123 constructed as described above, the length of the fiber assemblies extending outward from the bonded part 123 of each of the split cleaning parts 124 in the cleaning element is longer in the rear of the cleaning element in which the bonding line 123a is formed and in the front of the cleaning element in which the bonding line 123c is formed than in the middle of the cleaning element in which the bonding line 123b is formed. On the other hand, the length of the fiber assemblies extending inward from the bonded parts 123 of each of the split cleaning parts 124 in the cleaning element is shorter in the rear of the cleaning element in which the bonding line 123a is formed and in the front of the cleaning element in which the bonding line 123c is formed than in the middle of the cleaning element in which the bonding line 123b is formed.

With such arrangement, corners of the front or rear end of the cleaning element in which the length of the fiber assemblies is relatively long come in soft contact with the object to be cleaned. Further, due to the relatively short length of the fiber assemblies extending inward in the front of the cleaning element, the object to be cleaned can be easily inserted into the space 125 between the split cleaning parts 124 (the object can be easily caught in the space 125).

Further, in this embodiment, a predetermined relationship is preferably realized between the lengths of the bonding lines in the bonded part 123 constructed as described above. Typically, the bonding lines 123a and 123c are designed to extend in the range of 15% to 30% of the longitudinal length of the split cleaning part 124 from the rear end and the front end of the cleaning element, respectively. Further, the bonding line 123a and the bonding line 123b, or the bonding line 123c and the bonding line 123b may be designed to overlap each other in a direction transverse to the longitudinal direction of the split cleaning part 124.

Preferably, each of the holding sheets 114 and the front sheets 118 which are described above has a plurality of zigzag strips (strip portions) 114a, 118a at the both ends in its lateral direction. In this case, the holding sheets 114 and the front sheets 118 are also referred to as strip sheets. The strips 114a, 118a having such a construction are provided with a highly effective cleaning function which can easily trap dust or scrape dust out of a depression. Further, the strips 114a, 118a may have the same kind or different kinds of shape appropriately selected from various shapes, such as zigzag, linear and curved shapes. In this embodiment, each of the strips 114a, 118a extends in the longitudinal direction of the split cleaning parts 124 (in a direction transverse to the extending direction of the holding part 142).

The construction of a nonwoven fabric forming the above-described base sheet 113, holding sheet 114 and front sheet 118 and the construction of the fiber assembly 117 are now explained in detail.

### (Construction of Nonwoven Fabric)

The base sheet 113, the holding sheet 114 and the front sheet 118 can typically be formed of sheet-like nonwoven fabric comprising thermal melting fibers (thermoplastic fibers). Therefore, the base sheet 113 and the holding sheet 114 are also referred to as the "nonwoven fabric sheet". The base sheet 113, the holding sheet 114 and the front sheet 118 herein form the "nonwoven fabric sheet" according to this invention. The nonwoven fabric has a sheet-like configuration formed by fixing or intertwining fibers by mechanical, chemical or heat treatment. The nonwoven fabric partly includes thermoplastic fibers and thus can be fusion bonded. Further, the nonwoven fabric has a plurality of strips. Examples of the thermal melting fibers (thermoplastic fibers) include polyethylene, polypropylene and polyethylene terephthalate.

Further, the nonwoven fabric preferably comprises thermoplastic fibers having practical strength of 10 to 100 g/m². The nonwoven fabric may be manufactured by through-air bonding, spun bonding, thermal bonding, spun lacing, point bonding, melt blowing, stitch bonding, chemical bonding, needle punching or other similar processes. This nonwoven fabric is a feature that corresponds to the "nonwoven fabric" according to this invention. In order to enhance the dust wiping function, it is preferred to use a nonwoven fabric having higher rigidity. Further, as an alternative to or in addition to the nonwoven fabric, strips made of urethane, sponge, woven fabric, net, split cloth or other similar materials may be used.

### (Construction of Fiber Assembly)

The fiber assembly 117 is a single fiber structure formed by fibers, a fiber structure having fibers aligned in the length direction and/or the radial direction (twist yarn, spun yarn, yarn to which a plurality of filaments are partially connected), or an assembly of the fiber structures. The fiber assembly 117 partially includes thermoplastic fibers and can be fusion bonded. The fibers forming the fiber assembly 117 are elements of yarn, textile or the like and defined as being thin and flexible fibers having a substantially longer length compared with the thickness. Typically, a long continuous fiber is defined as a filament and a short fiber as a staple. Like the strips 114a and 118a of the holding sheet 114 and the front sheet 118, the fibers of the fiber assembly 117 extend in elongate shape in a direction transverse to the extending direction of the holding part 142. The fiber assembly 117 is also referred to as the "fiber bundle" having a plurality of fibers in a bundle. The fiber assembly 117 herein is a feature that corresponds to the "fiber assembly" according to this invention.

Further, in this embodiment, three fiber assemblies 117 are stacked in layers, but one or more layers of fiber assemblies may be used as necessary. Preferably, the fiber assembly 117 has a planar structure having a predetermined flat or curved surface and has a three-dimensional form having a certain thickness or has a thin sheet-like form. The "fiber assembly" here is typically formed of polyethylene (PE), polypropylene (PP), polyethylene terephthalate (PET), nylon, rayon or the like. In practical use, an assembly of filaments formed by opening a tow is frequently used as the fiber assembly. It is particularly preferable that the fiber assembly comprises conjugated fibers having a core of polypropylene (PP) or polyethylene terephthalate (PET) and a core covering sheath of polyethylene (PE). Further, the filaments of the fiber assembly are preferred to have a fineness of 0.5 to 66 dtex. The individual fiber assembly may contain fibers of substantially the same fineness, or it may contain fibers of different finenesses. When using fibers containing thermoplastic resin, it is preferred to use at least two or more kinds of resins having different melting points (for example, resins between which the difference in the melting point is 20°C or more).

Further, in order to enhance the dust wiping function, it is preferred to use a fiber assembly including fibers having higher rigidity or fibers having higher fineness. It is further preferred that the fiber assembly has crimped fibers. In this case, it is preferred to use crimped fibers having about 2 to 12 crimps per cm (5 to 30 crimps per inch). Here, the crimped fibers are fibers subjected to a predetermined crimping process and easily interwined with each other. With the fibers being crimped, the fiber assembly becomes bulkier than before the holder is attached thereto, and dust can be easily captured by the crimped portions. This structure can be realized especially by using crimped fibers opened from a tow. Further, in order to reliably adsorb dirt, dust or the like, it is preferred to use fibers containing dust adsorbent oil.

For the fiber assembly, flat yarns or split yarns may also be used. The flat yarns are prepared by slitting a film into tapes and by stretching the tapes in the longitudinal direction. The split yarns are prepared by splitting a thermoplastic film resin in the direction perpendicular to the orientation direction of the resin so that the film is fibrillated and interconnected into a net shape. Alternatively, a nonwoven fabric which is bulky and has low fiber density, such as a through-air bonded nonwoven fabric, may be used to form the fiber assembly.

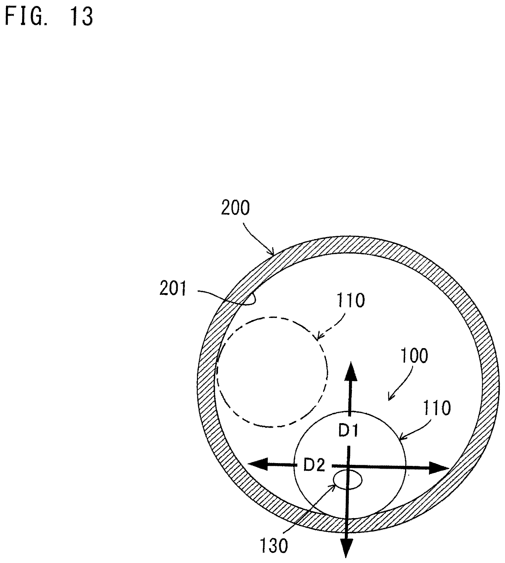

Specific effects in cleaning an object 200 to be cleaned by the cleaning tool 100 constructed as described above are now described with reference to FIGS. 13 to 20.

### (First Cleaning Pattern)

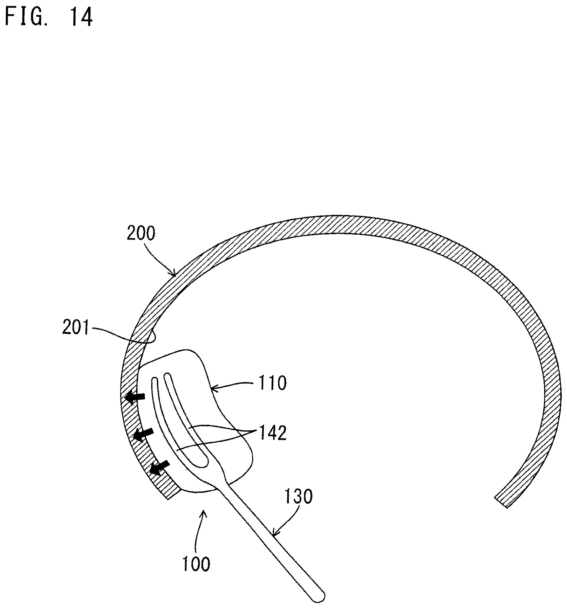

FIGS. 13 and 14 schematically illustrate a manner of performing a cleaning operation in a first cleaning pattern by using the cleaning tool 100 of this embodiment. The first cleaning pattern is intended for cleaning the object 200 having a curved surface 201 to be cleaned, such as a shade of a lamp or a lighting and a vase, by using the outer surface of the cleaning element 110. In the cleaning operation in this pattern, as shown in FIG. 13, the cleaning element 110 of the cleaning tool 100 is pressed against the surface 201 to be cleaned and moved along the curved surface of the surface 201 to be cleaned, for example, from the position shown by solid line to the position shown by two-dot chain line in FIG. 13. In this embodiment, each of the holding parts 142 of the cleaning element holder 130 has deflection displacement characteristics as described above around its longitudinal axis (at least in the first and second directions D1, D2). Therefore, when the cleaning element 110 works upon the surface 201 to be cleaned, the holding part 142 deflects into an appropriate form, regardless of the position of the user's wrist or without strictly considering the position and orientation of the cleaning element holder 130. As a result, as shown in FIG. 14, the cleaning element 110 can be always held in close contact with the surface 201 to be cleaned, so that any part of the surface 201 to be cleaned can be prevented from being left without being wiped.

### (Second Cleaning Pattern)

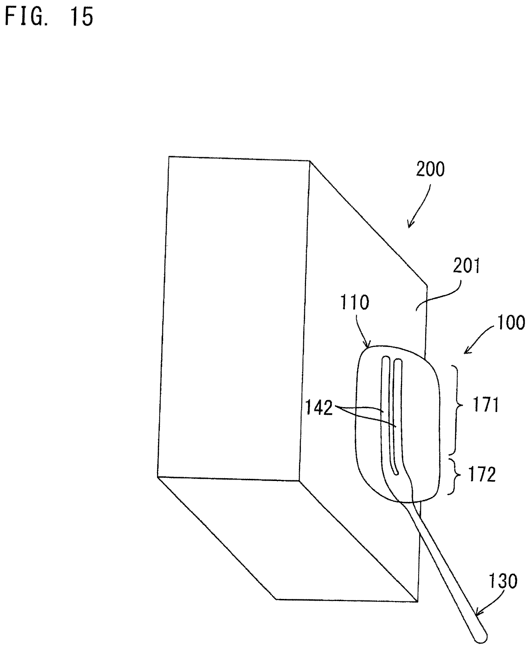

FIG. 15 schematically illustrates a manner of performing a cleaning operation in a second cleaning pattern by using the cleaning tool 100 of this embodiment. The second cleaning pattern is intended for cleaning the object 200 having a flat surface 201 to be cleaned, such as a floor and a wall, by using the outer surface of the cleaning element 110. In the cleaning operation in this pattern, an end region of the cleaning element 110 of the cleaning tool 100 is pressed against the surface 201 to be cleaned. At this time, the holding part 142 has appropriate deflection displacement characteristics as described above, so that, as shown in FIG. 15, a wide range of the cleaning element 110 including the end region comes in surface contact with the surface 201 to be cleaned. A first region 171 of the cleaning element 110 which is securely pressed against the surface 201 to be cleaned is far larger than a second region 172 of the cleaning element 110 which is not securely pressed against (only held in contact with) the surface 201 to be cleaned. Therefore, the load applied to the cleaning element holder 130 by the user is dispersed by surface contact of the cleaning element 110 with the surface 201 to be cleaned, so that the load on the user can be lightened. Thus, the cleaning tool can provide a better feel in use. Further, by surface contact of the wide range of the cleaning element 110 including its end region with the surface 201 to be cleaned, the wiping effect can be enhanced.

### (Third Cleaning Pattern)

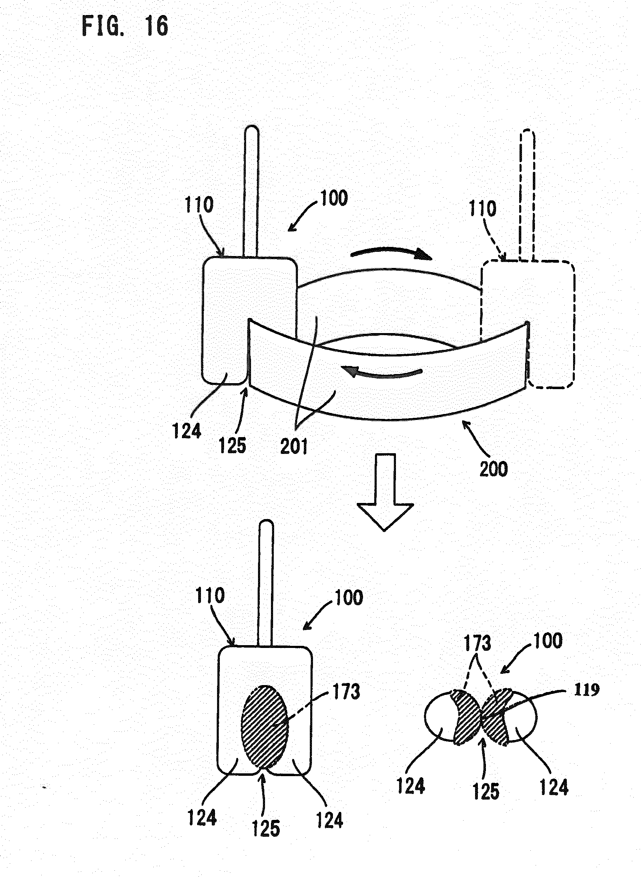

FIG. 16 schematically illustrates a manner of performing a cleaning operation in a third cleaning pattern by using the cleaning tool 100 of this embodiment. The third cleaning pattern is intended for cleaning the object 200 having a curved surface 201 to be cleaned, such as a shade of a lamp or a lighting and a vase, by holding it between the split cleaning parts 124 of the cleaning element 110. In the cleaning operation in this pattern, the object 200 to be cleaned is inserted into the space 125 between the split cleaning parts 124, and the cleaning element 110 is moved along the curved surface of the surface 201 to be cleaned as shown by the arrow in FIG. 16, for example, from the position shown by solid line to the position shown by two-dot chain line in FIG. 16. Thus, the surfaces 201 on the both sides of the object 200 to be cleaned can be wiped at a time. Further, as shown in FIG. 16, a dirty region 173 is concentrated only on a region of the cleaning element 110 in the vicinity of the space 125. Therefore, the life of the cleaning element 110 can be increased by using regions of the cleaning element 110 other than this region in the vicinity of the space 125.

### (Fourth Cleaning Pattern)

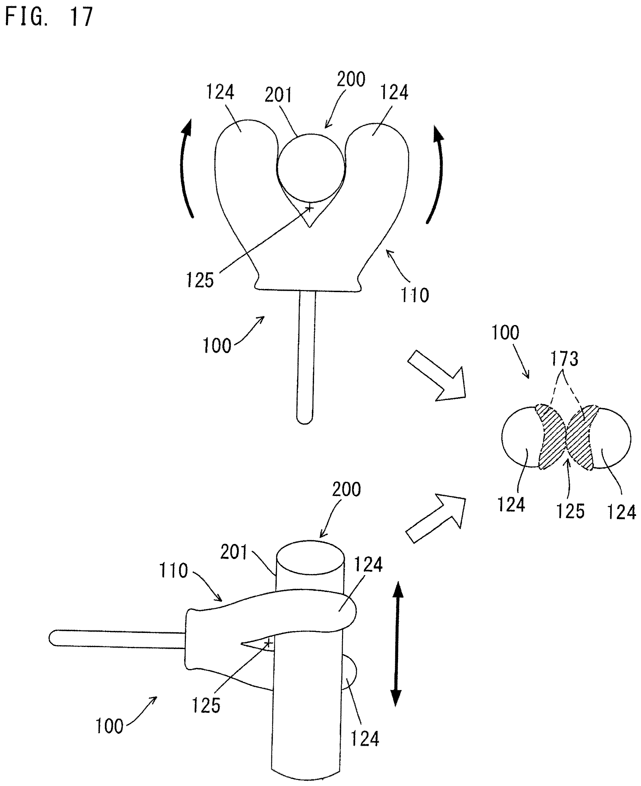

FIG. 17 schematically illustrates a manner of performing a cleaning operation in a fourth cleaning pattern by using the cleaning tool 100 of this embodiment. The fourth cleaning pattern is intended for cleaning a wider object 200 than the insert space 147 between the holding parts 142, by holding the object 200 between the split cleaning parts 124 of the cleaning element 110. In the cleaning operation in this pattern, the object 200 to be cleaned is inserted into the space 125 between the split cleaning parts 124, and the cleaning element 110 is moved in the back-and-forth direction or the vertical direction as shown by the arrows in FIG. 17. Thus, the wider object 200 than the insert space 147 between the holding parts 142 can be wiped at a time by holding it between the holding parts 142. Further, the dirty region 173 shown in FIG. 17 is concentrated only on a region of the cleaning element 110 in the vicinity of the space 125. Therefore, the life of the cleaning element 110 can be increased by using regions of the cleaning element 110 other than this region in the vicinity of the space 125.

### (Fifth Cleaning Pattern)

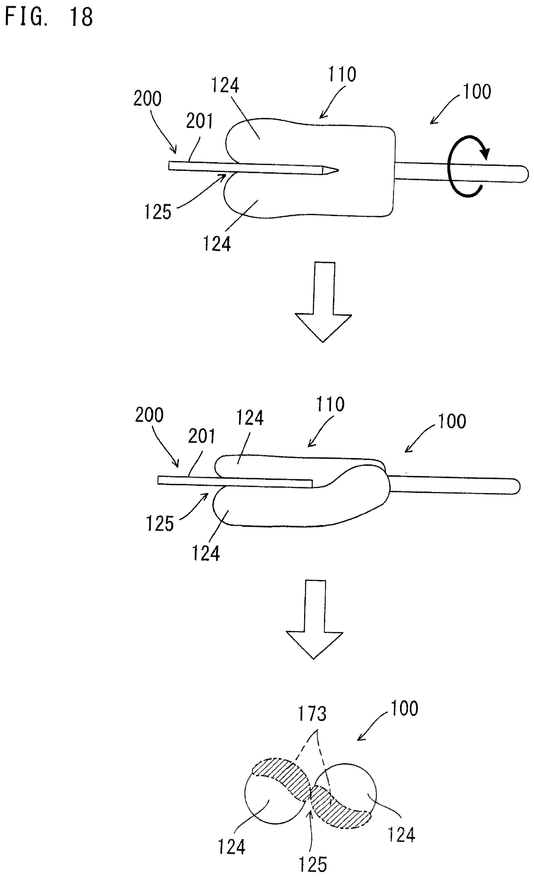

FIG. 18 schematically illustrates a manner of performing a cleaning operation in a fifth cleaning pattern by using the cleaning tool 100 of this embodiment. The fifth cleaning pattern is intended for cleaning a narrow, thin or small object 200 having a width equal to or smaller than the insert space 147 between the holding parts 142, by holding the object 200 between the split cleaning parts 124 of the cleaning element 110. In the cleaning operation in this pattern, the object 200 to be cleaned is inserted into the space 125 between the split cleaning parts 1 24, and the cleaning element 110 is twisted as shown in FIG. 18. Thus, by twisting the cleaning element 110, even the small object 200 having a width equal to or smaller than the insert space 147 between the holding parts 142 can be wiped in closer contact with the surface 201 to be cleaned. Further, the dirty region 173 shown in FIG. 18 is concentrated only on a region of the cleaning element 110 in the vicinity of the space 125. Therefore, the life of the cleaning element 110 can be increased by using regions of the cleaning element 110 other than this region in the vicinity of the space 125.

### (Sixth Cleaning Pattern)

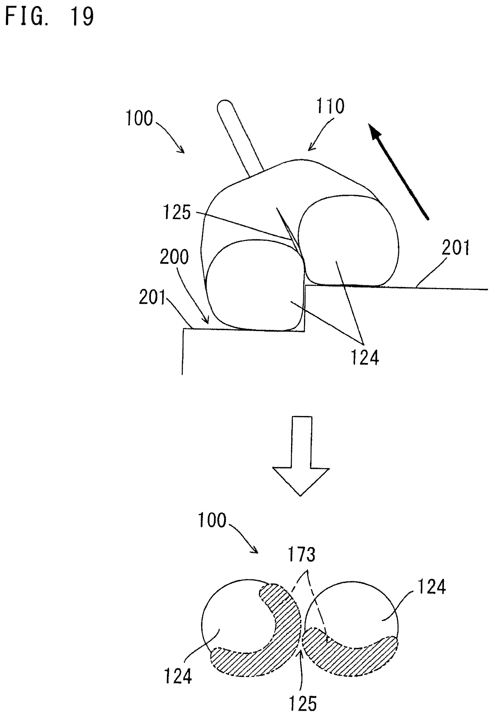

FIG. 19 schematically illustrates a manner of performing a cleaning operation in a sixth cleaning pattern by using the cleaning tool 100 of this embodiment. The sixth cleaning pattern is intended for cleaning an object 200 having a stepped surface 201 to be cleaned, by the outer surface of the cleaning element 110. In the cleaning operation in this pattern, as shown in FIG. 19, the cleaning element 110 of the cleaning tool 100 is pressed against the surface 201 to be cleaned and moved in the direction of the arrow shown in FIG. 19. Thus, even the stepped surface can be wiped at a time by the cleaning element 110. Further, the dirty region 173 shown in FIG. 19 is concentrated only on a region of the cleaning element 110 in the vicinity of the space 125. Therefore, the life of the cleaning element 110 can be increased by using regions of the cleaning element 110 other than this region in the vicinity of the space 125.

### (Seventh Cleaning Pattern)

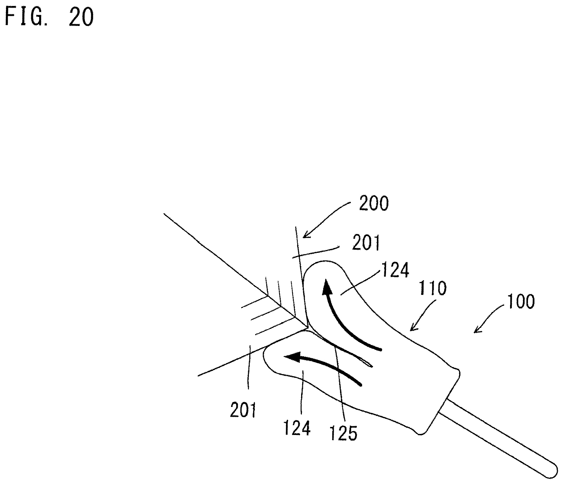

FIG. 20 schematically illustrates a manner of performing a cleaning operation in a seventh cleaning pattern by using the cleaning tool 100 of this embodiment. The seventh cleaning pattern is intended for cleaning an object 200 having a surface 201 to be cleaned which is formed on a corner, by the end portion of the cleaning element 110. In the cleaning operation in this pattern, as shown in FIG. 20, the cleaning element 110 of the cleaning tool 100 is pressed against the corner and moved in the direction of the arrow shown in FIG. 20. Thus, the end portion of the cleaning element 110 is opened at the space 125 and the corner is held between the split cleaning parts 124, so that the surface 201 to be cleaned can be wiped at a time.

### (Other Embodiments)

Further, the present invention is not limited to the above-described embodiment, but rather, may be added to, changed, replaced with alternatives or otherwise modified. For example, the following embodiments can also be performed in application of the above-described embodiment.

In this invention, the kinds and numbers of the component parts of the cleaning element 110 and the cleaning element holder 130 are not limited to those described in the above-described example, and can be selected as necessary.

Further, in the above-described embodiment, the cleaning element holder 130 having the pair holding parts 142 and the cleaning element 110 having the two split cleaning parts 124 associated with the holding parts 142 are described, but in the present invention, the numbers of the holding parts 142 and the split cleaning parts 124 are not limited to two and may also be appropriately set in the range of three or more.

Further, in the above-described embodiment, the cleaning element 110 is formed by a sheet-like nonwoven fabric and a fiber assembly, but in this invention, the cleaning element 110 may be formed by either one of the sheet-like nonwoven fabric and the fiber assembly.

Further, in the cleaning element 110 of the above-described embodiment, each of the cleaning sheet parts 116 has the front sheet 118, but the front sheet 118 can be omitted as necessary, for example, according to change of design specifications of the cleaning element 110.

### BRIEF DESCRIPTION OF THE DRAWINGS

FIG. 1 is a perspective view showing a cleaning element 110 and a cleaning element holder 130 that form a cleaning tool 100 according to an embodiment of the present invention, in a state in which they are not yet attached to each other.
FIG. 2 is a side view of holding parts 142 in FIG. 1.
FIG. 3 is a plan view of the holding parts 142 in FIG. 1.
FIG. 4 is a side view of the holding parts 142 in FIG. 1, schematically illustrating the manner of measuring deflection displacement in a first direction D1.
FIG. 5 is a plan view of the holding parts 142 in FIG. 1, schematically illustrating the manner of measuring deflection displacement in a second direction D2.
FIG. 6 shows sectional shapes of the holding part 142, taken along line D-D in FIG. 3.
FIG. 7 is a perspective view of the cleaning element 110 of FIG. 1 which is shown separated into elements of a layered structure.
FIG. 8 is a perspective view of a holding sheet part 112 of the cleaning element 110 in FIG. 1.
FIG. 9 is a plan view of the holding sheet part 112 in FIG. 8.
FIG. 10 is a sectional view of the cleaning element 110, taken along line A-A in FIG. 1.
FIG. 11 is a sectional view of the cleaning element 110, taken along line B-B in FIG. 1.
FIG. 12 is a sectional view of the cleaning element 110, taken along line C-C in FIG. 1.
FIG. 13 schematically illustrates a manner of performing a cleaning operation in a first cleaning pattern by using the cleaning tool 1 00 of this embodiment.
FIG. 14 schematically illustrates a manner of performing a cleaning operation in the first cleaning pattern by using the cleaning tool 100 of this embodiment.
FIG. 15 schematically illustrates a manner of performing a cleaning operation in a second cleaning pattern by using the cleaning tool 100 of this embodiment.
FIG. 16 schematically illustrates a manner of performing a cleaning operation in a third cleaning pattern by using the cleaning tool 100 of this embodiment.
FIG. 17 schematically illustrates a manner of performing a cleaning operation in a fourth cleaning pattern by using the cleaning tool 100 of this embodiment.
FIG. 18 schematically illustrates a manner of performing a cleaning operation in a fifth cleaning pattern by using the cleaning tool 100 of this embodiment.
FIG. 19 schematically illustrates a manner of performing a cleaning operation in a sixth cleaning pattern by using the cleaning tool 100 of this embodiment.
FIG. 20 schematically illustrates a manner of performing a cleaning operation in a seventh cleaning pattern by using the cleaning tool 100 of this embodiment.

### Description of Numerals

- 100: cleaning tool
- 110: cleaning element
- 112: holding sheet part
- 113: base sheet
- 114: holding sheet
- 114a: strip
- 115: insert hole
- 115a: opening
- 115b: first insert hole component
- 115c: second insert hole component
- 116: cleaning element sheet part
- 117: fiber assembly
- 118: front sheet
- 118a: strip
- 119: overlap region
- 121: bonded part
- 121a, 121b, 121c: bonding line
- 123: bonded part
- 123a, 123b, 123c, 123d: bonding line
- 124: split cleaning part
- 125: space
- 130: cleaning element holder
- 140: holder body
- 141: connection
- 142: holding part
- 142a: root
- 143: end
- 144: inclined surface
- 145: recessed surface
- 146: protruding piece
- 147: insert space
- 150: handle
- 151: handle body
- 160: retainer
- 171: first region
- 172: second region
- 173: dirty region
- 200: object to be cleaned
- 201: surface to be cleaned

## Claims

1. An elongate cleaning element holder (130) for holding a cleaning element (110) to be used for cleaning an object to be cleaned comprising:
a grip part (150, 151) to be held by user's hand, and a plurality of holding parts (142) which extend from the grip part (150, 151) in a longitudinal direction of the cleaning element holder (130) and hold the cleaning element (110), wherein:
each holding part (142) has deflection displacement characteristics at least in a first direction (D1) along a thickness (d1) of the holding part (142) and transverse to an extending direction of the holding part (142) and a second direction (D2) along a width (d2) of the holding part (142) and transverse to the first direction (D1), the holding parts (142) being disposed side by side in the second direction (D2), and
an insert space (147) for the object to be cleaned is provided between the holding parts (142) disposed side by side; **characterized in that**:
when a load of 2.5 N is applied in the first direction (D1) to an end (143) of the holding part (142) in the extending direction, the holding part (142) deflects 15 to 80 degrees in the first direction (D1), and when a load of 2.5 N is applied in the second direction (D2) to the end (143) of the holding part (142), the holding part (142) deflects 25 to 55 degrees in the second direction (D2); and
a distance (13) between the holding parts (142) disposed side by side is constant in the extending direction of the holding part (142) and the width (d2) of each of the holding parts (142) along the second direction (D2) increases toward the end (143) from a connection (141) between the holding part (142) and the grip part (150, 151).

2. The cleaning element holder as defined in claim 1, wherein, when a load of 0.5 N is applied to the end (143) in the first direction (D1), the holding part (142) deflects 6 to 50 degrees in the first direction (D1), and when a load of 0.5 N is applied to the end (143) in the second direction (D2), the holding part (142) deflects 8 to 35 degrees in the second direction (D2).

3. The cleaning element holder as defined in claim 1 or 2, wherein, when a load of 4.7 N is applied to the end (143) in the first direction (D1), the holding part (142) deflects 35 to 85 degrees in the first direction (D1), and when a load of 4.7 N is applied to the end (143) in the second direction (D2), the holding part (142) deflects 45 to 83 degrees in the second direction (D2).

4. The cleaning element holder as defined in any one of claims 1 to 3, wherein the thickness (d1) of the holding part (142) along the first direction (D1) decreases toward the end (143) from the connection (141).

5. The cleaning element holder as defined in any one of claims 1 to 3, wherein the thickness (d1) of the holding part (142) along the first direction (D1) is constant in the extending direction of the holding part (142).

6. The cleaning element holder as defined in claim 4 or 5, wherein a lower surface of the holding part (142) along the first direction (D1) is recessed upward in the first direction (D1).

7. The cleaning element holder as defined in any preceding claim, wherein, when a load of 2.5 N is applied to the end (143), the holding part (142) deflects such than an amount of displacement in the second direction (D2) is smaller than an amount of displacement in the first direction (D1).

8. A cleaning tool (100) having a cleaning element (110) to be used for cleaning an object to be cleaned, and an elongate cleaning element holder (130) for holding the cleaning element (110), wherein:
the cleaning element (110) includes a fiber assembly (117) formed by a plurality of fibers extending in a direction transverse to a longitudinal direction of the cleaning element (110), a nonwoven fabric laminate (112) formed by a plurality of nonwoven fabric sheets (113, 114, 118), a bonded part (121) for bonding the fiber assembly (117) and the nonwoven fabric laminate (112) which are overlaid one on the other, and an insert region (115), and
the cleaning element holder (130) comprises the cleaning element holder (130) as defined in any one of claims 1 to 7.

## Patentansprüche

1. Langgestreckter Reinigungselementhalter (130) zum Halten eines Reinigungselements (110), das zum Reinigen eines zu reinigenden Gegenstands verwendet wird, umfassend:
ein Griffteil (150, 151), das von der Hand eines Benutzers zu halten ist, und mehrere Halteteile (142), die sich von dem Griffteil (150, 151) aus in einer Längsrichtung des Reinigungselementhalters (130) erstrecken und das Reinigungselement (110) halten, wobei:
jedes Halteteil (142) Auslenkungs-Verschiebungs-Eigenschaften mindestens in einer ersten Richtung (D1) entlang einer Dicke (d1) des Halteteils (142) und quer zu einer Erstreckungsrichtung des Halteteils (142) und einer zweiten Richtung (D2) entlang einer Breite (d2) des Halteteils (142) und quer zu der ersten Richtung (D1) hat, wobei die Halteteile (142) in der zweiten Richtung (D2) nebeneinander angeordnet sind, und
einen Einführraum (147) für den zu reinigenden Gegenstand zwischen den nebeneinander angeordneten Halteteilen (142) vorgesehen ist; **dadurch gekennzeichnet, dass**
wenn eine Last von 2,5 N in der ersten Richtung (D1) an ein Ende (143) des Halteteils (142) in der Erstreckungsrichtung angelegt wird, das Halteteil (142) um 15 bis 80 Grad in der ersten Richtung (D1) ausgelenkt wird, und wenn eine Last von 2,5 N in der zweiten Richtung (D2) an das Ende (143) des Halteteils (142) angelegt wird, das Halteteil (142) um 25 bis 55 Grad in der zweiten Richtung (D2) ausgelenkt wird; und
ein Abstand (13) zwischen den nebeneinander angeordneten Halteteilen (142) in der Erstreckungsrichtung des Halteteils (142) konstant ist und die Breite (d2) eines jeden der Halteteile (142) entlang der zweiten Richtung (D2) von einer Verbindung (141) zwischen dem Halteteil (142) und dem Griffteil (150, 151) zu dem Ende (143) hin zunimmt.

2. Reinigungselementhalter gemäß Anspruch 1, wobei, wenn ein Last von 0,5 N an das Ende (143) in der ersten Richtung (D1) angelegt wird, das Halteteil (142) um 6 bis 50 Grad in der ersten Richtung (D1) ausgelenkt wird, und wenn eine Last von 0,5 N an das Ende (143) in der zweiten Richtung (D2) angelegt wird, das Halteteil (142) um 8 bis 35 Grad in der zweiten Richtung (D2) ausgelenkt wird.

3. Reinigungselementhalter gemäß Anspruch 1 oder 2, wobei, wenn eine Last von 4,7 N an das Ende (143) in der ersten Richtung (D1) angelegt wird, das Halteteil (142) um 35 bis 85 Grad in der ersten Richtung (D1) ausgelenkt wird, und wenn eine Last von 4,7 N an das Ende (143) in der zweiten Richtung (D2) angelegt wird, das Halteteil (142) um 45 bis 83 Grad in der zweiten Richtung (D2) ausgelenkt wird.

4. Reinigungselementhalter gemäß einem der Ansprüche 1 bis 3, wobei die Dicke (d1) des Halteteils (142) entlang der ersten Richtung (D1) von der Verbindung (141) zu dem Ende (143) hin zunimmt.

5. Reinigungselementhalter gemäß einem der Ansprüche 1 bis 3, wobei die Dicke (d1) des Halteteils (142) entlang der ersten Richtung (D1) in der Erstreckungsrichtung des Halteteils (142) konstant ist.

6. Reinigungselementhalter gemäß Anspruch 4 oder 5, wobei eine untere Oberfläche des Halteteils (142) entlang der ersten Richtung (D1) in der ersten Richtung (D1) nach oben hin ausgenommen ist.

7. Reinigungselementhalter gemäß einem der vorhergehenden Ansprüche, wobei, wenn eine Last von 2,5 N an das Ende (143) angelegt wird, das Halteteil (142) so ausgelenkt wird, dass eine Verschiebung in der zweiten Richtung (D2) kleiner als eine Verschiebung in der ersten Richtung (D1) ist.

8. Reinigungswerkzeug (100), das ein Reinigungselement (110), das zum Reinigen eines zu reinigenden Gegenstands verwendet wird, und einen langgestreckten Reinigungselementhalter (130) zum Halten des Reinigungselements (110) hat, wobei:
das Reinigungselement (110) eine Faseranordnung (117), die von einer Vielzahl von Fasern gebildet wird, die sich in einer Richtung quer zu einer Längsrichtung des Reinigungselements (110) erstrecken, einen Vliesstoff-Schichtstoff (112), der von einer Vielzahl von Vliesstoffschichten (113, 114, 118) gebildet wird, einen verbundenen Teil (121) zum Verbinden der Faseranordnung (117) und des Vliesstoff-Schichtstoffs (112), die einander überlagern, und einen Einführbereich (115) aufweist, und
der Reinigungselementhalter (130) den Reinigungselementhalter (130) gemäß einem der Ansprüche 1 bis 7 umfasst.

## Revendications

1. Support d'élément de nettoyage allongé (130) pour supporter un élément de nettoyage (110) destiné à être utilisé pour nettoyer un objet à nettoyer, comprenant :
une partie de préhension (150, 151) destinée à être tenue par la main de l'utilisateur, et une pluralité de parties de support (142) qui s'étendent à partir de la partie de préhension (150, 151) dans une direction longitudinale du support d'élément de nettoyage (130) et supportent l'élément de nettoyage (110), dans lequel :
chaque partie de support (142) a des caractéristiques de déplacement de déflexion au moins dans une première direction (D1) le long d'une épaisseur (d1) de la partie de support (142) et transversale par rapport à une direction d'extension de la partie de support (142) et une seconde direction (D2) le long d'une largeur (d2) de la partie de support (142) et transversale par rapport à la première direction (D1), les parties de support (142) étant disposées côte à côte dans la seconde direction (D2), et
un espace d'insertion (147) pour l'objet à nettoyer, est prévu entre les parties de support (142) disposées côte à côte ;
**caractérisé en ce que** :
lorsqu'une charge de 2,5 N est appliquée dans la première direction (D1) sur une extrémité (143) de la partie de support (142) dans la direction d'extension, la partie de support (142) dévie de 15 à 80 degrés dans la première direction (D1), et lorsqu'une charge de 2,5 N est appliquée dans la seconde direction (D2), sur l'extrémité (143) de la partie de support (142), la partie de support (142) dévie de 25 à 55 degrés dans la seconde direction (D2); et
une distance (13) entre les parties de support (142) disposées côte à côte, est constante dans la direction d'extension de la partie de support (142) et la largeur (d2) de chacune des parties de support (142) le long de la seconde direction (D2) augmente vers l'extrémité (143) à partir d'un raccordement (141) entre la partie de support (142) et la partie de préhension (150, 151).

2. Support d'élément de nettoyage selon la revendication 1, dans lequel, lorsqu'une charge de 0,5 N est appliquée sur l'extrémité (143) dans la première direction (D1), la partie de support (142) dévie de 6 à 50 degrés dans la première direction (D1), et lorsqu'une charge de 0,5 N est appliquée sur l'extrémité (143) dans la seconde direction (D2), la partie de support (142) dévie de 8 à 35 degrés dans la seconde direction (D2).

3. Support d'élément de nettoyage selon la revendication 1 ou 2, dans lequel, lorsqu'une charge de 4,7 N est appliquée sur l'extrémité (143) dans la première direction (D1), la partie de support (142) dévie de 35 à 85 degrés dans la première direction (D1), et lorsqu'une charge de 4,7 N est appliquée sur l'extrémité (143) dans la seconde direction (D2), la partie de support (142) dévie de 45 à 83 degrés dans la seconde direction (D2).

4. Support d'élément de nettoyage selon l'une quelconque des revendications 1 à 3, dans lequel l'épaisseur (d1) de la partie de support (142) le long de la première direction (D1) diminue vers l'extrémité (143) à partir du raccordement (141).

5. Support d'élément de nettoyage selon l'une quelconque des revendications 1 à 3, dans lequel l'épaisseur (d1) de la partie de support (142) le long de la première direction (D1) est constante dans la direction d'extension de la partie de support (142).

6. Support d'élément de nettoyage selon la revendication 4 ou 5, dans lequel une surface inférieure de la partie de support (142) le long de la première direction (D1) est évidée vers le haut dans la première direction (D1).

7. Support d'élément de nettoyage selon l'une quelconque des revendications précédentes, dans lequel, lorsqu'une charge de 2,5 N est appliquée sur l'extrémité (143), la partie de support (142) dévie de sorte qu'une quantité de déplacement dans la seconde direction (D2) est inférieure à une quantité de déplacement dans la première direction (D1).

8. Ustensile de nettoyage (100) ayant un élément de nettoyage (110) destiné être utilisé pour nettoyer un objet à nettoyer, et un support d'élément de nettoyage allongé (130) pour supporter l'élément de nettoyage (110), dans lequel :
l'élément de nettoyage (110) comprend un ensemble de fibres (117) formé par une pluralité de fibres s'étendant dans une direction transversale par rapport à une direction longitudinale de l'élément de nettoyage (110), un stratifié en tissu non tissé (112) formé par une pluralité de feuilles de tissu non tissé (113, 114, 118), une partie reliée (121) pour relier l'ensemble de fibres (117) et le stratifié en tissu non tissé (112) qui sont superposés l'un sur l'autre, et une région d'insertion (115), et
le support d'élément de nettoyage (130) comprend le support d'élément de nettoyage (130) selon l'une quelconque des revendications 1 à 7.
